(19) **Europäisches Patentamt / European Patent Office / Office européen des brevets**

(11) **EP 4 401 000 A1**

(12) **EUROPEAN PATENT APPLICATION**
published in accordance with Art. 153(4) EPC

(43) Date of publication:
**17.07.2024 Bulletin 2024/29**

(21) Application number: **22871995.1**

(22) Date of filing: **21.09.2022**

(51) International Patent Classification (IPC):
**G06F 40/117** (2020.01)     **G06N 3/04** (2023.01)

(52) Cooperative Patent Classification (CPC):
**G06F 40/117; G06N 3/04; G06N 3/0464;**
**G06N 3/08; G06V 10/764**

(86) International application number:
**PCT/CN2022/120108**

(87) International publication number:
**WO 2023/045949 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 CN 202111138624**

(71) Applicant: **Huawei Technologies Co., Ltd.**
**Shenzhen, Guangdong 518129 (CN)**

(72) Inventors:
• **HUANG, Wenyong**
  **Shenzhen, Guangdong 518129 (CN)**
• **ZHANG, Zhenhe**
  **Shenzhen, Guangdong 518129 (CN)**
• **YEUNG, Yu Ting**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **MODEL TRAINING METHOD AND RELATED DEVICE**

(57)     This application provides a model training method and a related device. A final model obtained according to the method not only can accurately obtain a label of a data sequence in a normal condition, but also cannot accurately obtain a label of a data sequence in an abnormal condition. The method in this application includes: obtaining a first data sequence and a perturbed first data sequence; processing the perturbed first data sequence by using a first to-be-trained model to obtain a first feature sequence, and processing the first data sequence by using a second to-be-trained model to obtain a second feature sequence; training the first to-be-trained model and the second to-be-trained model based on the first feature sequence and the second feature sequence to obtain a first target model and a second target model; and fine-tuning the first target model or the second target model to obtain a third target model, where the third target model is used to obtain a label of a data sequence.

FIG. 4

## Description

This application claims priority to the Chinese Patent Application No. 202111138624.6, filed with the China National Intellectual Property Administration on September 27, 2021, and entitled "MODEL TRAINING METHOD AND RELATED DEVICE", which is incorporated herein by reference in its entirety.

## TECHNICAL FIELD

This application relates to the field of artificial intelligence (artificial intelligence, AI) technologies, and in particular, to a model training method and a related device.

## BACKGROUND

To meet a requirement of a user for intelligent processing of data, a data sequence may be processed by using a neural network model to obtain a label of the data sequence. For example, a speech sequence is recognized by using a neural network model to obtain a text corresponding to the speech sequence. For another example, an image sequence is classified by using a neural network to obtain a category of the image sequence.

A training process of the foregoing neural network model usually includes two stages: a pre-training (pre-train) stage and a fine-tuning (fine-tune) stage. Specifically, a to-be-trained model may be obtained, the to-be-trained model may be pre-trained by using a first data sequence (which is usually a data sequence with an unknown label), and then a pre-trained model is fine-tuned by using a second data sequence (which is usually a data sequence with a known label) to obtain the neural network model.

However, the pre-training stage is often complex in design, and consequently pre-training of the to-be-trained model cannot be completed by using a perturbed first data sequence. In this case, a finally obtained neural network model usually can only accurately obtain a label of a data sequence in a normal condition (for example, a speech sequence in a quiet environment), but cannot accurately obtain a label of a data sequence in an abnormal condition (that is, after perturbation) (for example, a speech sequence in a noisy environment).

## SUMMARY

Embodiments of this application provide a model training method and a related device. A final model obtained according to the method not only can accurately obtain a label of a data sequence in a normal condition, but also cannot accurately obtain a label of a data sequence in an abnormal condition.

A first aspect of the embodiments of this application provides a model training method, and the method includes:

When a neural network model that has a capability of obtaining a label of a sequence needs to be obtained, a first to-be-trained model and a second to-be-trained model may be obtained, and the first to-be-trained model and the second to-be-trained model are first pre-trained. Usually, a structure of the first to-be-trained model and a structure of the second to-be-trained model may be the same.

After the first to-be-trained model and the second to-be-trained model are obtained, a first data sequence may be obtained, and the first data sequence is perturbed to obtain a perturbed first data sequence. The first data sequence includes a plurality of elements, and each element represents a part of data. Similarly, the perturbed first data sequence includes a plurality of elements, and each element represents a part of perturbed data.

Then, the perturbed first data sequence may be input to the first to-be-trained model, to perform feature extraction processing on the perturbed first data sequence by using the first to-be-trained model, so as to obtain a first feature sequence. The first data sequence is input to the second to-be-trained model, to process the first data sequence by using the second to-be-trained model, so as to obtain a second feature sequence.

Then, the first to-be-trained model may be trained based on the first feature sequence and the second feature sequence, to obtain a first target model. In a process of training the first to-be-trained model, joint training may be further performed on the second to-be-trained model. To be specific, a parameter of the second to-be-trained model is updated based on a parameter in the training process of the first to-be-trained model, to obtain a second target model.

Finally, the first target model or the second target model is fine-tuned to obtain a third target model, and the third target model is used to obtain a label of a data sequence.

The foregoing method provides a new model training architecture. The architecture includes two branches: a first to-be-trained model and a second to-be-trained model, which can implement joint pre-training of the two models. Specifically, after a first data sequence and a perturbed first data sequence are obtained, the first data sequence may be processed by using a branch in which the first to-be-trained model is located, to obtain a first feature sequence, and the perturbed first data sequence is processed by using a branch in which the second to-be-trained model is located, to obtain a second feature sequence. Then, joint training is performed on the first to-be-trained model and the second to-be-trained model based on the first feature sequence and the second feature sequence, to correspondingly obtain a first target model and a second target model. Finally, the first target model or the second target model is fine-tuned to obtain a third target model, and the third target model is used to obtain a label of a data sequence. It can be learned that in the new model training architecture, feature extraction can be performed on the perturbed first data sequence by using the first to-be-trained model, and feature extraction is performed on the original first data sequence by using the second to-be-trained model. Then, joint training is performed on the first to-be-trained model and the second to-be-trained model by using two features obtained based on the feature extraction, to complete pre-training of the two models. A final model (namely, the third target model) obtained in this pre-training manner not only can accurately obtain a label of a data sequence in a normal condition, but also cannot accurately obtain a label of a data sequence in an abnormal condition (that is, after perturbation).

In a possible implementation, that the first to-be-trained model and the second to-be-trained model are trained based on the first feature sequence and the second feature sequence to obtain the first target model and the second target model includes: obtaining a first loss based on the first feature sequence and the second feature sequence, where the first loss indicates a difference between the first feature sequence and the second feature sequence; and updating a parameter of the first to-be-trained model based on the first loss, and updating a parameter of the second to-be-trained model based on the updated parameter of the first to-be-trained model until a model training condition is met, to obtain the first target model and the second target model. In the foregoing implementation, after the first feature sequence and the second feature sequence are obtained, the first feature sequence and the second feature sequence may be calculated by using a preset first loss function, to obtain the first loss. The first loss indicates the difference between the first feature sequence and the second feature sequence, that is, for any element in the first feature sequence, the first loss indicates a difference between the element and a corresponding element in the second feature sequence (namely, a same ordered element in the second feature sequence). After the first loss is obtained, the parameter of the first to-be-trained model may be updated based on the first loss, and the parameter of the second to-be-trained model may be updated based on the updated parameter of the first to-be-trained model. Thereafter, a next batch of first data sequences may be continuously collected, and the updated first to-be-trained model and the updated second to-be-trained model may be continuously trained by using the next batch of first data sequences until a model training condition (for example, the first loss converges) is met. This is equivalent to completing pre-training for the first to-be-trained model and pre-training for the second to-be-trained model, and the first target model and the second target model can be correspondingly obtained.

In a possible implementation, a parameter of the updated second to-be-trained model is determined based on the updated parameter of the first to-be-trained model, the parameter of the second to-be-trained model, and a preset weight. In the foregoing implementation, because the two models may be trained in a plurality of rounds, any round of training may be understood as training performed on the two models by using this batch of first data sequences. Therefore, in a training process of a current round (that is, in a process of training the two models by using a current batch of first data sequences), after the parameter of the first to-be-trained model is updated based on a first loss of the current round, a parameter of a first to-be-trained model updated in the current round, a parameter of a second to-be-trained model updated in a previous round, and the preset weight can be used to determine a parameter of a second to-be-trained model updated in the current round. It can be learned that an average moving value of a historical parameter of the first to-be-trained model may be used as the parameter of the second to-be-trained model, and joint training of the two models can be implemented, to optimize performance of the finally obtained model.

In a possible implementation, that the first target model or the second target model is fine-tuned to obtain a third target model includes: obtaining a second data sequence; fusing one of the first target model and the second target model with a preset model to obtain a third to-be-trained model; processing the second data sequence by using the third to-be-trained model, to obtain a predicted label of the second data sequence; and training the third to-be-trained model based on a real label and the predicted label of the second data sequence, to obtain a third target model. In the foregoing implementation, after pre-training of the first to-be-trained model and pre-training of the second to-be-trained model are completed, the first target model and the second target model can be obtained. Because the first target model and the second target model are functionally similar to each other, one of the first target model and the second target model can be selected for fine-tuning, to obtain the third target model that can be used in an actual application, namely, a neural network model with a capability of obtaining a label of a data sequence.

In a possible implementation, before the first data sequence is processed by using the first to-be-trained model to obtain the first feature sequence, and the perturbed first data sequence is processed by using the second to-be-trained model to obtain the second feature sequence, the method further includes: adding padding elements to two ends of the first data sequence or two ends of the perturbed first data sequence. In the foregoing implementation, in a process of pre-training the first to-be-trained model and the second to-be-trained model, the padding elements may be added to the first data sequence or the perturbed first data sequence, so that in a training process, the two models not only can use location information of elements in the sequence, but also can better learn content of the elements in the sequence, thereby improving performance of the finally obtained model.

In a possible implementation, the perturbation includes at least one of adding noise, adding reverberation, and adding a mask in a time-frequency domain.

In a possible implementation, the first data sequence and the second data sequence are speech sequences, and that the third target model is used to obtain a label of a data sequence is specifically that the third target model is used to obtain a recognition result of the speech sequence, for example, the third target model may be used to obtain text corresponding to the speech sequence. Alternatively, the first data sequence and the second data sequence are text sequences, and that the third target model is used to obtain a label of a data sequence is specifically that the third target model is used to obtain a recognition result of the text sequence, for example, the third target model may be used to obtain content of the text sequence. Alternatively, the first data sequence and the second data sequence are image sequences, and that the third target model is used to obtain a label of a data sequence is specifically that the third target model is used to obtain a classification result of the image sequence, for example, the third target model may be used to obtain a category of the image sequence.

A second aspect of the embodiments of this application provides a sequence label obtaining method, and the method includes: obtaining a target data sequence; and processing the target data sequence by using a third target model, to obtain a label of the target data sequence, where the third target model is obtained through training according to any one of the first aspect or the possible implementations of the first aspect.

It can be learned from the foregoing method that the third target model is obtained based on one of the branches of the foregoing training architecture. Therefore, the third target model can perform specific processing on the target data sequence to accurately obtain the label of the target data sequence, and has a relatively great label obtaining capability.

A third aspect of the embodiments of this application provides a model training apparatus. The apparatus includes: an obtaining module, configured to obtain a first data sequence and a perturbed first data sequence; a pre-training module, configured to process the perturbed first data sequence by using a first to-be-trained model to obtain a first feature sequence, and process the first data sequence by using a second to-be-trained model to obtain a second feature sequence, where the pre-training module is further configured to train the first to-be-trained model and the second to-be-trained model based on the first feature sequence and the second feature sequence to obtain a first target model and a second target model, the first target model is obtained by training the first to-be-trained model based on the first feature sequence and the second feature sequence, and the second target model is obtained based on a parameter in a training process of the first to-be-trained model; and a fine-tuning module, configured to fine-tune the first target model or the second target model to obtain a third target model, where the third target model is used to obtain a label of a data sequence.

The foregoing apparatus provides a new model training architecture. The architecture includes two branches: a first to-be-trained model and a second to-be-trained model, which can implement joint pre-training of the two models. Specifically, after a first data sequence and a perturbed first data sequence are obtained, the first data sequence may be processed by using a branch in which the first to-be-trained model is located, to obtain a first feature sequence, and the perturbed first data sequence is processed by using a branch in which the second to-be-trained model is located, to obtain a second feature sequence. Then, joint training is performed on the first to-be-trained model and the second to-be-trained model based on the first feature sequence and the second feature sequence, to correspondingly obtain a first target model and a second target model. Finally, the first target model or the second target model is fine-tuned to obtain a third target model, and the third target model is used to obtain a label of a data sequence. It can be learned that in the new model training architecture, feature extraction can be performed on the perturbed first data sequence by using the first to-be-trained model, and feature extraction is performed on the original first data sequence by using the second to-be-trained model. Then, joint training is performed on the first to-be-trained model and the second to-be-trained model by using two features obtained based on the feature extraction, to complete pre-training of the two models. A final model (namely, the third target model) obtained in this pre-training manner not only can accurately obtain a label of a data sequence in a normal condition, but also cannot accurately obtain a label of a data sequence in an abnormal condition (that is, after perturbation).

In a possible implementation, the pre-training module is configured to: obtain a first loss based on the first feature sequence and the second feature sequence, where the first loss indicates a difference between the first feature sequence and the second feature sequence; and update a parameter of the first to-be-trained model based on the first loss, and update a parameter of the second to-be-trained model based on the updated parameter of the first to-be-trained model until a model training condition is met, to obtain the first target model and the second target model.

In a possible implementation, the updated parameter of the second to-be-trained model is determined based on the updated parameter of the first to-be-trained model, the parameter of the second to-be-trained model, and a preset weight.

In a possible implementation, the fine-tuning module is configured to: obtain a second data sequence; fuse one of the first target model and the second target model with a preset model to obtain a third to-be-trained model; process the second data sequence by using the third to-be-trained model, to obtain a predicted label of the second data sequence; and train the third to-be-trained model based on a real label and the predicted label of the second data sequence, to obtain the third target model.

In a possible implementation, the obtaining module is further configured to add padding elements to two ends of the first data sequence or two ends of the perturbed first data sequence.

In a possible implementation, the perturbation includes at least one of adding noise, adding reverberation, and adding a mask in a time-frequency domain.

In a possible implementation, the first data sequence and the second data sequence are speech sequences, and that the third target model is used to obtain a label of a data sequence is specifically that the third target model is used to obtain a recognition result of the speech sequence; or the first data sequence and the second data sequence are text sequences, and that the third target model is used to obtain a label of a data sequence is specifically that the third target model is used to obtain a recognition result of the text sequence; or the first data sequence and the second data sequence are image sequences, and that the third target model is used to obtain a label of a data sequence is specifically that the third target model is used to obtain a classification result of the image sequence.

A fourth aspect of the embodiments of this application provides a sequence label obtaining apparatus, and the apparatus includes an obtaining module, configured to obtain a target data sequence; and a processing module, configured to process the target data sequence by using a third target model, to obtain a label of the target data sequence, where the third target model is obtained through training according to the model training method according to any one of the first aspect or the possible implementations of the first aspect.

It can be learned from the foregoing apparatus that the third target model is obtained based on one of the branches of the foregoing training architecture. Therefore, the third target model can perform specific processing on the target data sequence to accurately obtain the label of the target data sequence, and has a relatively great label obtaining capability.

A fifth aspect of the embodiments of this application provides a model training apparatus, and the apparatus includes a memory and a processor. The memory stores code, and the processor is configured to execute the code. When the code is executed, the model training apparatus performs the method according to any one of the first aspect or the possible implementations of the first aspect.

A sixth aspect of the embodiments of this application provides a sequence label obtaining apparatus, and the apparatus includes a memory and a processor. The memory stores code, and the processor is configured to execute the code. When the code is executed, the sequence label obtaining apparatus performs the method according to the second aspect.

A seventh aspect of the embodiments of this application provides a circuit system, and the circuit system includes a processing circuit. The processing circuit is configured to perform the method according to any one of the first aspect, the possible implementations of the first aspect, or the second aspect.

An eighth aspect of the embodiments of this application provides a chip system, and the chip system includes a processor, configured to invoke a computer program or computer instructions stored in a memory, so that the processor is enabled to perform the method according to any one of the first aspect, the possible implementations of the first aspect, or the second aspect.

In a possible implementation, the processor is coupled to the memory through an interface.

In a possible implementation, the chip system further includes the memory, and the memory stores the computer program or the computer instructions.

A ninth aspect of the embodiments of this application provides a computer storage medium, and the computer storage medium stores a computer program. When the program is executed by a computer, the computer is enabled to implement the method according to any one of the first aspect, the possible implementations of the first aspect, or the second aspect.

A tenth aspect of the embodiments of this application provides a computer program product, and the computer program product stores instructions. When the instructions are executed by a computer, the computer is enabled to implement the method according to any one of the first aspect, the possible implementations of the first aspect, or the second aspect.

An embodiment of this application provides a new model training architecture. The architecture includes two branches: a first to-be-trained model and a second to-be-trained model, which can implement joint pre-training of the two models. Specifically, after a first data sequence and a perturbed first data sequence are obtained, the first data sequence may be processed by using a branch in which the first to-be-trained model is located, to obtain a first feature sequence, and the perturbed first data sequence is processed by using a branch in which the second to-be-trained model is located, to obtain a second feature sequence. Then, joint training is performed on the first to-be-trained model and the second to-be-trained model based on the first feature sequence and the second feature sequence, to correspondingly obtain a first target model and a second target model. Finally, the first target model or the second target model is fine-tuned to obtain a third target model, and the third target model is used to obtain a label of a data sequence. It can be learned that in the new model training architecture, feature extraction can be performed on the perturbed first data sequence by using the first to-be-trained model, and feature extraction is performed on the original first data sequence by using the second to-be-trained model. Then, joint training is performed on the first to-be-trained model and the second to-be-trained model by using two features obtained based on the feature extraction, to complete pre-training of the two models. A final model (namely, the third target model) obtained in this pre-training manner not only can accurately obtain a label of a data sequence in a normal condition, but also cannot accurately obtain a label of a data sequence in an abnormal condition (that is, after perturbation).

## BRIEF DESCRIPTION OF DRAWINGS

FIG. 1 is a schematic diagram of a structure of an artificial intelligence main framework;

FIG. 2a is a schematic diagram of a structure of a data sequence processing system according to an embodiment of this application;

FIG. 2b is a schematic diagram of another structure of a data sequence processing system according to an embodiment of this application;

FIG. 2c is a schematic diagram of a related device for data sequence processing according to an embodiment of this application;

FIG. 3 is a schematic diagram of a system architecture 100 according to an embodiment of this application;

FIG. 4 is a schematic flowchart of a model training method according to an embodiment of this application;

FIG. 5 is a schematic diagram of a pre-training stage according to an embodiment of this application;

FIG. 6 is another schematic flowchart of a model training method according to an embodiment of this application;

FIG. 7 is another schematic diagram of a pre-training stage according to an embodiment of this application;

FIG. 8 is another schematic flowchart of a model training method according to an embodiment of this application;

FIG. 9 is a schematic flowchart of a sequence label obtaining method according to an embodiment of this application;

FIG. 10 is a schematic diagram of a structure of a model training apparatus according to an embodiment of this application;

FIG. 11 is a schematic diagram of a structure of a sequence label obtaining apparatus according to an embodiment of this application;

FIG. 12 is a schematic diagram of a structure of an execution device according to an embodiment of this application;

FIG. 13 is a schematic diagram of a structure of a training device according to an embodiment of this application; and

FIG. 14 is a schematic diagram of a structure of a chip according to an embodiment of this application.

## DESCRIPTION OF EMBODIMENTS

Embodiments of this application provide a model training method and a related device. A final model obtained according to the method not only can accurately obtain a label of a data sequence in a normal condition, but also cannot accurately obtain a label of a data sequence in an abnormal condition.

In this specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, and this is merely a distinguishing manner for describing objects having a same attribute in embodiments of this application. In addition, the terms "include", "have" and any other variants mean to cover a non-exclusive inclusion, so that a process, method, system, product, or device that includes a series of units is not necessarily limited to those units, but may include another unit not clearly listed or inherent to such a process, method, product, or device.

With rapid development of technologies, AI technologies are widely used in people's daily life. To meet people's requirement for intelligent processing of data, a data sequence may be processed by using a neural network model in AI technologies to obtain a label of the data sequence. For example, a speech sequence is recognized by using a neural network model to obtain a text corresponding to the speech sequence. For another example, an image sequence is classified by using a neural network to obtain a category of the image sequence. For still another example, a text sequence is recognized by using a neural network model to obtain content indicated by the text sequence.

A training process of the foregoing neural network model usually includes two stages: a pre-training stage constructed based on a supervised learning (supervised learning) method and a fine-tuning stage constructed based on an unsupervised learning (unsupervised learning) method. For ease of description, the following uses an example in which the data sequence is a speech sequence for description. Specifically, a to-be-trained model may be obtained, the to-be-trained model may be pre-trained by using a first speech sequence (where text corresponding to the first speech sequence is unknown), and then a pre-trained model is fine-tuned by using a second speech sequence (where text corresponding to the second speech sequence is unknown), to obtain a neural network model that can implement speech recognition.

However, the foregoing pre-training stage is often complex in design, and a conventional data augmentation method cannot be used to perturb the first speech sequence (for example, add noise to the first speech sequence, and the like). Consequently, pre-training of the to-be-trained model cannot be completed by using a perturbed first data sequence. In this case, during actual application, a finally obtained neural network model usually can only accurately obtain a label of a data sequence in a normal condition (for example, a speech sequence in a quiet environment), but cannot accurately obtain a label of a data sequence in an abnormal condition (that is, after perturbation) (for example, a speech sequence in a noisy environment).

To resolve the foregoing problem, this application provides a model training method. The method can be implemented in combination with an artificial intelligence (artificial intelligence, AI) technology. The AI technology is a technology subject that simulates, extends, and expands human intelligence by using a digital computer or a machine controlled by a digital computer. The AI technology obtains a best result by sensing an environment, obtaining knowledge, and using knowledge. In other words, the artificial intelligence technology is a branch of computer science, and attempts to understand an essence of intelligence and produce a new intelligent machine that can react in a manner similar to human intelligence. Use of artificial intelligence for data processing is a common application manner of artificial intelligence.

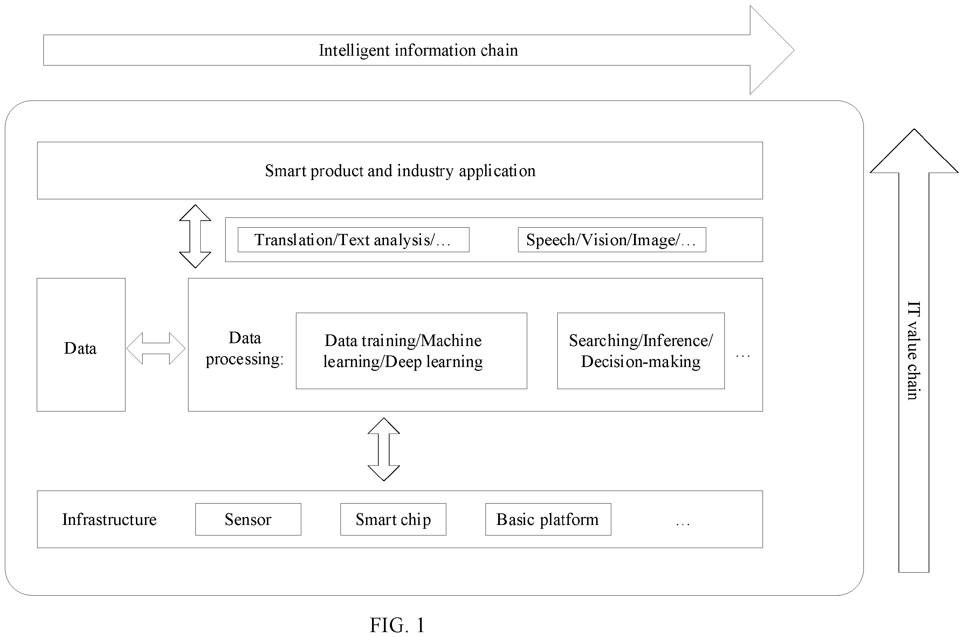

First, an overall working procedure of an artificial intelligence system is described. FIG. 1 is a schematic diagram of a structure of an artificial intelligence main framework. The artificial intelligence subject framework is described from two dimensions: an "intelligent information chain" (a horizontal axis) and an "IT value chain" (a vertical axis). The "intelligent information chain" reflects a series of processes from data obtaining to processing. For example, the process may be a general process of intelligent information perception, intelligent information representation and formation, intelligent inference, intelligent decision-making, and intelligent execution and output. In this process, data experiences a condensing process of "data-information-knowledge-wisdom". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform of the infrastructure includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

(2) Data

Data at an upper layer of the infrastructure indicates a data source in the field of artificial intelligence. The data relates to a graph, an image, speech, and text, further relates to Internet of things data of a conventional device, and includes service data of an existing system and perception data such as force, displacement, a liquid level, a temperature, and humidity.

(3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. A typical function is searching and matching.

Decision-making is a process in which a decision is made after intelligent information is inferred, and usually provides functions such as classification, ranking, and prediction.

(4) General capability

After data processing mentioned above is performed on data, some general capabilities may be further formed based on a data processing result, for example, an algorithm or a general system, such as translation, text analysis, computer vision processing, speech recognition, and image recognition.

(5) Smart product and industry application

The smart product and the industry application are a product and an application of the artificial intelligence system in various fields, and are a package of an overall solution of the artificial intelligence, so that decision-making for intelligent information is productized and an application is implemented. Application fields mainly include a smart terminal, smart transportation, smart health care, autonomous driving, a smart city, and the like.

The following describes several application scenarios of this application.

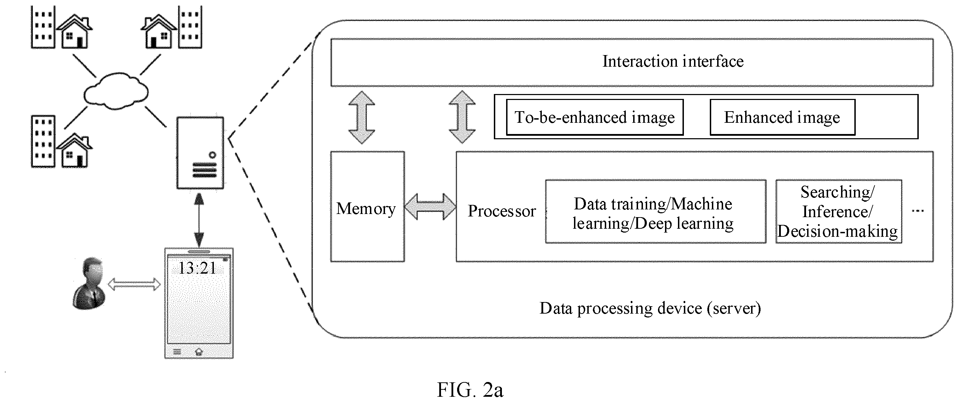

FIG. 2a is a schematic diagram of a structure of a data sequence processing system according to an embodiment of this application. The data sequence processing system includes user equipment and a data processing device. The user equipment includes a smart terminal such as a mobile phone, a personal computer, or an information processing center. The user equipment is an initiator of data sequence processing, and serves as an initiator of a data sequence processing request. Generally, a user initiates a request by using the user equipment.

The data processing device may be a device or a server with a data processing function, such as a cloud server, a network server, an application server, or a management server. The data processing device receives an image processing request from the intelligent terminal by using an interaction interface, and then performs image processing through machine learning, deep learning, searching, inference, decision-making, and the like by using a memory that stores data and a processor that processes data. The memory in the data processing device may be a general name, including a local storage and a database storing historical data. The database may be in the data processing device, or may be in another network server.

In the data sequence processing system shown in FIG. 2a, the user equipment may receive an instruction of the user, for example, the user equipment may obtain a data sequence (for example, a speech sequence, an image sequence, and a text sequence) input/selected by the user, and then initiate a request to the data processing device, so that the data processing device processes the data sequence (for example, obtains a label of the data sequence) obtained by the user equipment, to obtain a processing result for the data sequence. For example, the user equipment may obtain an image input by the user, and then initiate a recognition request of the speech sequence to the data processing device, so that the data processing device recognizes the speech sequence, to obtain a recognition result of the speech sequence, namely, a text corresponding to the speech sequence.

In FIG. 2a, the data processing device may perform a sequence label obtaining method in this embodiment of this application.

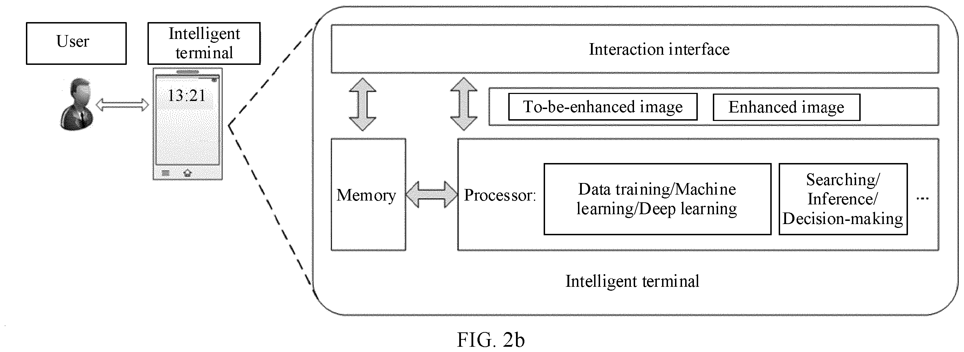

FIG. 2b is a schematic diagram of another structure of a data sequence processing system according to an embodiment of this application. In FIG. 2b, user equipment is directly used as a data processing device. The user equipment may directly obtain input from a user and directly process the input from the user by using hardware of the user equipment. A specific process is similar to that in FIG. 2a, and reference may be made to the foregoing description. Details are not described herein again.

In the data sequence processing system shown in FIG. 2b, the user equipment may receive an instruction of the user. For example, the user equipment may obtain a data sequence selected by the user in the user equipment, and then the user equipment performs data sequence processing (for example, obtains a label of the data sequence) for the data sequence, to obtain a processing result of the label of the obtained data sequence.

In FIG. 2b, the user equipment may perform the sequence label obtaining method in this embodiment of this application.

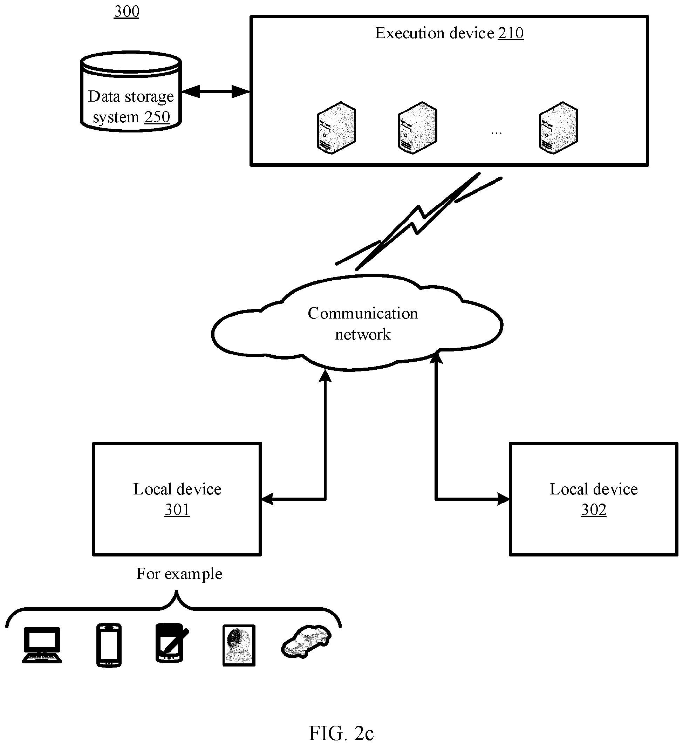

FIG. 2c is a schematic diagram of a related device for data sequence processing according to an embodiment of this application.

The user equipment in FIG. 2a and FIG. 2b may be specifically a local device 301 or a local device 302 in FIG. 2c, and the data processing device in FIG. 2a may be specifically an execution device 210 in FIG. 2c. A data storage system 250 may store to-be-processed data of the execution device 210. The data storage system 250 may be integrated on the execution device 210, or may be disposed on a cloud or another network server.

The processor in FIG. 2a and FIG. 2b may perform data training/machine learning/deep learning by using a neural network model or another model (for example, a model based on a support vector machine), and perform an image processing application for an image by using a model obtained by using data through final training or learning, to obtain a corresponding processing result.

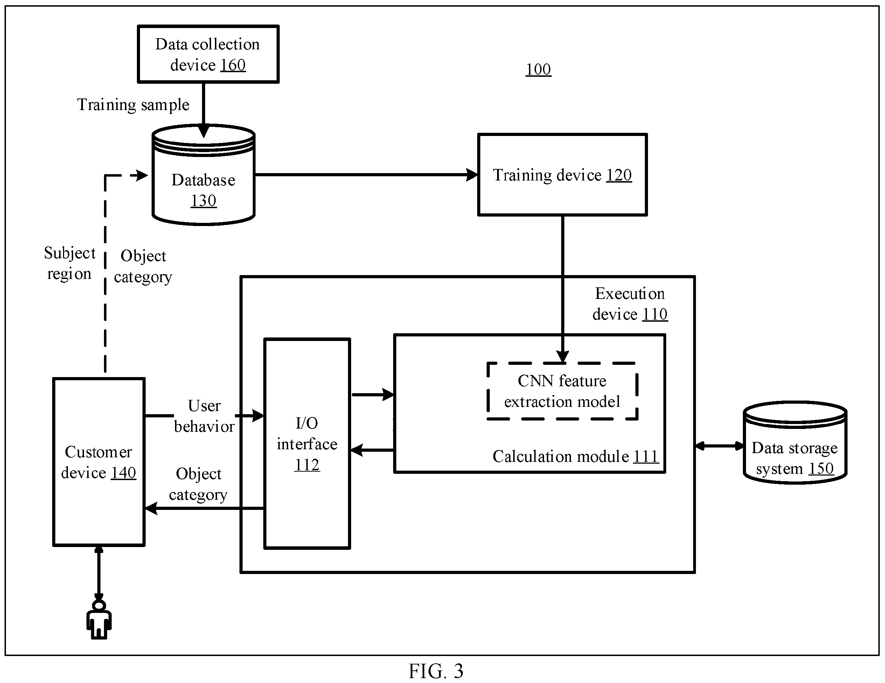

FIG. 3 is a schematic diagram of a system architecture 100 according to an embodiment of this application. In FIG. 3, an execution device 110 is configured with an input/output (input/output, I/O) interface 112, to perform data interaction with an external device, and a user may input data to the I/O interface 112 by using a client device 140. The input data in this embodiment of this application may include each to-be-scheduled task, a callable resource, and another parameter.

In a process in which the execution device 110 preprocesses the input data, or in a process in which a computing module 111 of the execution device 110 performs computing and the like (for example, implementing a function of a neural network in this application), the execution device 110 may invoke data, code, and the like in a data storage system 150 for corresponding processing, and may further store, in the data storage system 150, data, an instruction, and the like that are obtained through the corresponding processing.

Finally, the I/O interface 112 returns a processing result to the client device 140, and provides the processing result to the user.

It should be noted that a training device 120 may generate corresponding target models/rules for different targets or different tasks based on different training data. The corresponding target models/rules may be used to implement the foregoing targets or complete the foregoing tasks, to provide a required result for the user. The training data may be stored in a database 130, and is a training sample collected by a data collection device 160.

In a case shown in FIG. 3, the user may manually input data and the user may input the data on an interface provided by the I/O interface 112. In another case, the client device 140 may automatically send input data to the I/O interface 112. If it is required that the client device 140 needs to obtain authorization from the user to automatically send the input data, the user may set corresponding permission on the client device 140. The user may view, on the client device 140, a result output by the execution device 110. Specifically, the result may be presented in a form of displaying, a sound, an action, or the like. As shown in the figure, the client device 140 may alternatively be used as a data collection end, to collect, as new sample data, input data that is input to the I/O interface 112 and an output result that is output from the I/O interface 112, and store the new sample data in the database 130. It is clear that the client device 140 may alternatively not perform collection. Instead, the I/O interface 112 directly stores, in the database 130 as new sample data, input data that is input to the I/O interface 112 and an output result that is output from the I/O interface 112 that are shown in the figure.

It should be noted that FIG. 3 is merely a schematic diagram of the system architecture according to an embodiment of this application. A location relationship between a device, a component, a module, and the like shown in the figure constitutes no limitation. For example, in FIG. 3, the data storage system 150 is an external memory relative to the execution device 110. In another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete computing work of the computing module 111. The chip may alternatively be disposed in the training device 120 shown in FIG. 3, to complete training work of the training device 120 and output the target model/rule.

For the neural network processing unit NPU, the NPU is mounted on a host central processing unit (central processing unit, CPU) (host CPU) as a coprocessor. The host CPU allocates a task. A core part of the NPU is an operation circuit, and a controller controls the operation circuit to extract data in a memory (a weight memory or an input memory) and perform an operation.

In some implementations, the operation circuit includes a plurality of processing engines (process engine, PE) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches, from the weight memory, data corresponding to the matrix B, and caches the data on each PE in the operation circuit. The operation circuit fetches data of the matrix A from the input memory, to perform a matrix operation with the matrix B, and stores an obtained partial result or an obtained final result of the matrix in an accumulator (accumulator).

A vector calculation unit may perform further processing such as vector multiplication, vector addition, an exponent operation, a logarithm operation, or value comparison on an output of the operation circuit. For example, the vector calculation unit may be configured to perform network calculation, such as pooling (pooling), batch normalization (batch normalization), or local response normalization (local response normalization) at a nonconvolutional/non-FC layer in a neural network.

In some implementations, the vector calculation unit can store a processed output vector in a unified cache. For example, the vector calculation unit may apply a nonlinear function to an output, for example, a vector of an accumulated value, of the operation circuit to generate an activation value. In some implementations, the vector calculation unit generates a normalized value, a combined value, or both a normalized value and a combined value. In some implementations, the processed output vector can be used as an activation input to the operation circuit, for example, the processed output vector can be used at a subsequent layer of the neural network.

A unified memory is configured to store input data and output data.

For weight data, a direct memory access controller (direct memory access controller, DMAC) directly transfers input data in an external memory to the input memory and/or the unified memory, stores weight data in the external memory in the weight memory, and stores data in the unified memory in the external memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions cached in the instruction buffer, to implement a working process of controlling an operation accelerator.

Usually, the unified memory, the input memory, the weight memory, and the instruction fetch buffer may all be on-chip (On-Chip) memories. The external memory may be a memory outside the NPU, and the external memory may be a double data rate synchronous dynamic random access memory (double data rate synchronous dynamic random access memory, DDR SDRAM), a high bandwidth memory (high bandwidth memory, HBM), or another readable and writable memory.

Because embodiments of this application relate to massive application of a neural network, for ease of understanding, the following first describes terms and concepts related to the neural network in embodiments of this application.

(1) Neural network

The neural network may include a neural unit. The neural unit may be an operation unit that uses xs and an intercept of 1 as an input. An output of the operation unit may be as follows:

$$h_{W,b}\left(x\right) = f\left(W^{T}x\right) = f\left(\sum\nolimits_{s=1}^{n} W_s x_s + b\right) \tag{1},$$

where

s=1, 2, ..., n, n is a natural number greater than 1, Ws is a weight of xs, and b is bias of the neural unit; and f is an activation function (activation functions) of the neural unit, and is used to introduce a nonlinear feature into the neural network, to convert an input signal in the neural unit into an output signal. An output signal of the activation function may serve as an input of a next convolutional layer. The activation function may be a sigmoid function. The neural network is a network constituted by connecting a plurality of single neural units together. To be specific, an output of a neural unit may be an input to another neural unit. An input of each neural unit may be connected to a local receptive field of a previous layer to extract a feature of the local receptive field. The local receptive field may be a region including several neural units.

Work at each layer of the neural network may be described by using a mathematical expression $y = a(Wx + b)$ . From a physical layer, work at each layer of the neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operation 1, the operation 2, and the operation 3 are performed by $Wx$ , the operation 4 is performed by $+b$ , and the operation 5 is performed by $a()$ . The word "space" is used herein for expression because a classified object is not a single thing, but a type of things. Space is a collection of all individuals of such type of things. $W$ is a weight vector, and each value in the vector represents a weight value of one neuron in the neural network at this layer. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, the training process of the neural network is essentially a manner of learning control of space transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function).

The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

A neural network may use an error back propagation (back propagation, BP) algorithm to correct a value of a parameter in an initial neural network model in a training process, so that a reconstruction error loss of the neural network model becomes smaller. Specifically, an input signal is transferred forward until an error loss occurs at an output, and the parameter in the initial neural network model is updated based on back propagation error loss information, to make the error loss converge. The back propagation algorithm is an error-loss-centered back propagation motion intended to obtain a parameter, such as a weight matrix, of an optimal neural network model.

The following describes the method provided in this application from a neural network training side and a neural network application side.

The model training method provided in this embodiment of this application relates to data sequence processing, and may be specifically applied to data training, machine learning, deep learning, and the like. Symbolic and formal intelligent information modeling, extraction, preprocessing, training, and the like are performed on training data (for example, a first data sequence, the perturbed first data sequence, and a second data sequence in this application), and the trained neural network (for example, a third target model in this application) is finally obtained. In addition, the sequence label obtaining method provided in this embodiment of this application can be applied to the foregoing trained neural network, and input data (for example, a target data sequence in this application) is input to the trained neural network to obtain output data (for example, a label of the target data sequence in this application). It should be noted that the model training method and the sequence label obtaining method provided in the embodiments of this application are inventions generated based on a same concept, and may alternatively be understood as two parts of one system or two stages of an overall process, such as a model training stage and a model application stage.

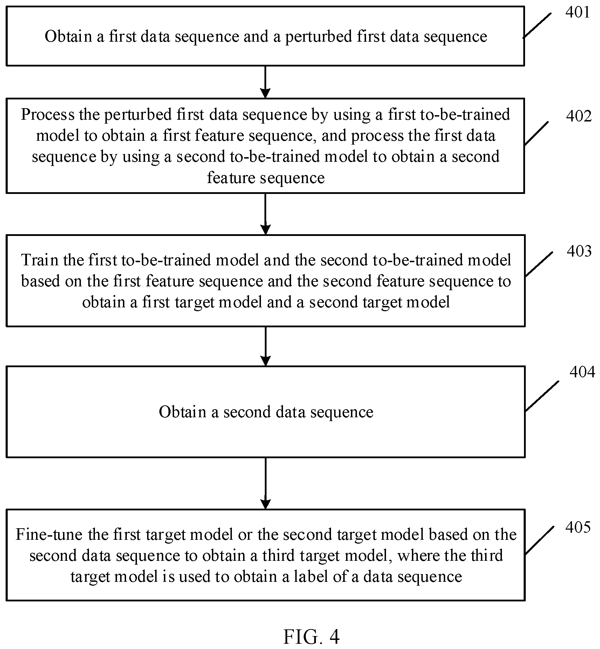

FIG. 4 is a schematic flowchart of a model training method according to an embodiment of this application. As shown in FIG. 4, the method includes the following steps.

401: Obtain a first data sequence and a perturbed first data sequence.

In this embodiment, when a neural network model that has a capability of obtaining a label of a sequence needs to be obtained, a first to-be-trained model and a second to-be-trained model may be obtained, and the first to-be-trained model and the second to-be-trained model are first pre-trained. Usually, a structure of the first to-be-trained model and a structure of the second to-be-trained model may be the same. For example, the first to-be-trained model may include any one or any combination of a convolutional layer, a full-connection layer, a pooling layer, a normalization layer, and the like. The second to-be-trained model includes a same layer. Details are not described herein again.

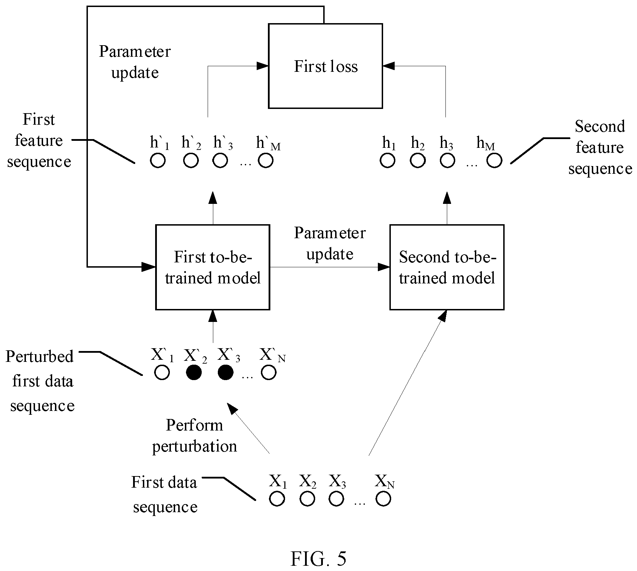

When pre-training starts, a current batch of first training data may be first collected. The batch of first training data includes a current batch of first data sequences used for training. A type of the first data sequence may vary based on an actual requirement (that is, types of the first data sequence are diverse), and the first data sequence is a data sequence with an unknown label (which may alternatively be understood as a data sequence without an annotation). For example, the first data sequence may be a first speech sequence, and a text corresponding to the first speech sequence is unknown. For another example, the first data sequence may be a first image sequence, and a category of the first image sequence is unknown. For another example, the first data sequence may be a first text sequence, and content of the first text sequence (a part of speech of the first text sequence, or the like) is unknown. It may be understood that the first data sequence includes a plurality of elements, and each element represents a part of data. For example, as shown in FIG. 5 (FIG. 5 is a schematic diagram of a pre-training stage according to an embodiment of this application), the first data sequence may be expressed as $X = \{X_1, X_2, X_3, ..., X_N\}$, and $X_i$ is an $i^{th}$ element in the first data sequence $X$, where $i = 1,2, ..., N$. $X_i$ is usually a vector, and represents a part of data (for example, a segment of a speech, an image block of an image, and a word of text).

After the first data sequence is obtained, the first data sequence may be perturbed to obtain the perturbed first data sequence. It may be understood that the perturbed first data sequence also includes a plurality of elements, and each element represents a part of perturbed data. An example shown in FIG. 5 is still used, the perturbed first data sequence may be expressed as $$X' = \{X'_1, X'_2, X'_3, ..., X'_N\}$$ , and $X'_i$ is an $i^{th}$ element in the perturbed first

data sequence $X^i$, where $i = 1,2, ... , N$. $X'_i$ is usually a vector, and represents a part of perturbed data.

It should be noted that a length of the original first data sequence is usually the same as a length of the perturbed first data sequence. In comparison with the original first data sequence, some elements in the perturbed first data sequence change. The example shown in FIG. 5 is still used. After the first data sequence is perturbed, it is assumed that a second element $X_2$ in the first data sequence $X$ is different from a second element $X_2'$ in the perturbed first data sequence $X^i$, a third element $X_3$ in the first data sequence $X$ is different from a third element $X_3'$ in the perturbed first data sequence $X^i$, but remaining elements in the first data sequence $X$ are the same as remaining elements in the perturbed first data sequence $X'$, that is, a first element $X_1$ in the first data sequence $X$ is the same as a first element $X_1'$ in the perturbed first data sequence $X'$, a fourth element $X_4$ in the first data sequence $X$ is the same as a fourth element $X_4'$ in the perturbed first data sequence $X'$, and so on.

In addition, a method for perturbing the first data sequence may be determined based on a type of the first data sequence. The foregoing example is still used. It is assumed that a collected first speech sequence is a speech sequence in a quiet environment. In this case, a conventional data augmentation method may be used to perturb the first speech sequence, that is, adding noise to the first speech sequence, so that some elements in the original first speech sequence change, to obtain a perturbed first speech sequence, namely, a speech sequence in a noise environment.

It should be understood that in this embodiment, adding noise to the first speech sequence is only used as a schematic description, and constitutes no limitation on the method for perturbing the first speech sequence in this application. For example, the method for perturbing the first speech sequence may alternatively be adding reverberation to the first speech sequence. For another example, the method for perturbing the first speech sequence may alternatively be adding a mask (mask) in a time-frequency domain to the first speech sequence.

It should also be understood that the first text sequence may be further perturbed, for example, a word mask is added to the first text sequence, and locations of elements in the sequence are randomly interchanged (that is, words in adjacent locations in a text are interchanged). The first image sequence may be further perturbed, for example, a first image sequence originally used to represent a color picture is converted into a first image sequence used to represent a black and white picture, and a mask is added to a random region of the first image sequence.

402: Process the perturbed first data sequence by using a first to-be-trained model to obtain a first feature sequence, and process the first data sequence by using a second to-be-trained model to obtain a second feature sequence.

After the first data sequence and the perturbed first data sequence are obtained, the perturbed first data sequence may be input to the first to-be-trained model, to perform feature extraction processing on the perturbed first data sequence by using the first to-be-trained model, to obtain the first feature sequence. Similarly, the first data sequence may be further input to the second to-be-trained model, to perform feature extraction processing on the first data sequence by using the second to-be-trained model, to obtain the second feature sequence.

It may be understood that the first feature sequence includes a plurality of elements, each element represents a feature of a part of data, the second feature sequence also includes a plurality of elements, and each element represents a feature of a part of perturbed data. The example shown in FIG. 5 is still used. The first data sequence $X$ may be input to the second to-be-trained model, and the second feature sequence output by the second to-be-trained model may be obtained. The second feature sequence may be expressed as H = $\{h_1, h_2, h_3, ..., h_M\}$, and $h_i$ is an $i^{th}$ element in the second feature sequence H , where $i$ = 1,2, ..., $M$ and $M \geq N$. $h_i$ is usually a vector, and represents a feature of a part of data. Similarly, the perturbed first data sequence $X'$ may be further input to the first to-be-trained model, and the first feature sequence may be obtained. The first feature sequence may be expressed as $H' = \{h_1', h_2', h_3', ..., h_M'\}$, and $h_i'$ is an $i^{th}$ element in the first feature sequence H', where $i$ = 1,2, ... , $M$. $h_i'$ is usually a vector, and represents a feature of a part of perturbed data.

403: Train the first to-be-trained model and the second to-be-trained model based on the first feature sequence and the second feature sequence to obtain a first target model and a second target model.

After the first feature sequence and the second feature sequence are obtained, the first to-be-trained model and the second to-be-trained model are trained based on the first feature sequence and the second feature sequence to correspondingly obtain the first target model and the second target model. Specifically, the first target model and the second target model may be obtained in the following manner:

(1) After the first feature sequence and the second feature sequence are obtained, the first feature sequence and the second feature sequence may be calculated by using a preset first loss function, to obtain a first loss. The first loss indicates a difference between the first feature sequence and the second feature sequence, that is, for any element in the first feature sequence, the first loss indicates a difference between the element and a corresponding element in the second feature sequence (namely, a same ordered element in the second feature sequence). The example shown in FIG. 5 is still used. After obtaining the first feature sequence H* and the second feature sequence H, because a purpose of pre-training is to make the $i^{th}$ element $h'_i$ in the first feature sequence H' as close as possible to the $i^{th}$ element $h_i$ in the second feature sequence H, and as far as possible away from remaining elements in the second feature sequence H, the first feature sequence H' and the second feature sequence H can be calculated by using a contrastive loss function (contrastive loss function), to obtain a first loss L. The first loss L can be obtained by using the following formula (namely, the contrastive loss function):

$$L = \log\left(\frac{\exp(sim(h'_i, h_i) / \mathrm{t})}{\sum_{\tilde{h} \sim \tilde{H}} \exp(sim(h'_i, \tilde{h}) / \mathrm{t})}\right) \qquad (2),$$

where

$\tilde{H}$ is a set of negative samples; for the $i^{th}$ element $h'_i$ in the first feature sequence H', the $i^{th}$ element $h_i$ in the second feature sequence H is a positive sample of $h'_i$; some or all of the remaining elements in the second feature sequence H other than the $i^{th}$ element may form $\tilde{H}$ of $h'_i$; sim(x, y) is a similarity function, and represents similarity between vectors x and y; and $\mathrm{t}$ is a preset parameter whose value is greater than 0.

(2) After the first loss is obtained, a parameter of the first to-be-trained model may be updated based on the first loss, and a parameter of the second to-be-trained model may be updated based on the updated parameter of the first to-be-trained model. Thereafter, a next batch of first training data (namely, a next batch of first data sequences) may be continuously collected, and the updated first to-be-trained model and the updated second to-be-trained model may be continuously trained by using the next batch of first training data (reference may be made to the foregoing process of training the two models by using the current batch of first training data, that is, performing step 401 to step 403 again) until a model training condition (for example, the first loss converges) is met. This is equivalent to completing pre-training for the first to-be-trained model and pre-training for the second to-be-trained model, and the first target model and the second target model can be correspondingly obtained.

Further, because the two models may be trained in a plurality of rounds, any round of training may be understood as training performed on the two models by using this batch of first training data. Therefore, in a training process of a current round (that is, in a process of training the two models by using the current batch of first training data), after the parameter of the first to-be-trained model is updated based on a first loss of the current round, a parameter of a first to-be-trained model updated in the current round, a parameter of a second to-be-trained model updated in a previous round, and a preset weight can be used to determine a parameter of a second to-be-trained model updated in the current round, which may be specifically determined by using the following formula:

$$W_i^T = \gamma \, W_{i-1}^T + (1 - \gamma) \, W_i^S \qquad (3),$$

where

$W_i^T$ is the parameter of the second to-be-trained model updated in the current round; $W_i^S$ is the parameter of the first to-be-trained model updated in the current round; $W_{i-1}^T$ is the parameter of the second to-be-trained model updated in the previous round and the preset weight; i is the current round; i - 1 is the previous round; and $\gamma$ is the preset weight (whose value may be set based on an actual requirement, which is not limited herein).

404: Obtain a second data sequence.

After the first target model and the second target model are obtained, it is equivalent to completing the pre-training stage of the model. Therefore, a fine-tuning stage of the model can be launched for one of the first target model and the second target model.

When fine-tuning starts, a current batch of second training data may be first collected. The batch of second training data includes a current batch of second data sequence used for training. A type of the second data sequence is the same as a type of the first training data, and the second data sequence is a data sequence of a known real label (which may alternatively be understood as a data sequence that carries an annotation). For example, if the first data sequence is a first speech sequence, the second data sequence is a second speech sequence, and a text corresponding to the second speech sequence is known. For another example, if the first data sequence is a first image sequence, the second data sequence is a second image sequence, and a category of the second image sequence is known. For another example, if the first data sequence is a first text sequence, the second data sequence is a second text sequence, and content of the second text sequence (a part of speech of the first text sequence, or the like) is known. It may be understood that the second data sequence includes a plurality of elements, and each element represents a part of data.

405: Fine-tune the first target model or the second target model based on the second data sequence to obtain a third target model, where the third target model is used to obtain a label of a data sequence.

After the second data sequence is obtained, the first target model or the second target model may be fine-tuned by using the second data sequence to obtain the third target model, where the third target model is used to obtain a label of a data sequence. Specifically, the third target model may be obtained in the following manner:

(1) One of the first target model and the second target model is fused with a preset model to obtain a third to-be-trained model. It should be noted that the preset model is usually some additional feature extraction layers, and the some layers may be concatenated at ends of the first target model and the second target model, to construct the third to-be-trained model. In this way, the third to-be-trained model can output a predicted label of the second data sequence.

(2) The second data sequence is processed by using the third to-be-trained model, to obtain the predicted label of the second data sequence.

It should be noted that, after the third to-be-trained model is obtained, the second data sequence may be input to the third to-be-trained model, to process the second data sequence by using the third to-be-trained model to obtain the predicted label of the second data sequence.

(3) The third to-be-trained model is trained based on a real label and the predicted label of the second data sequence, to obtain the third target model. It should be noted that, after the predicted label of the second data sequence is obtained, because the real label of the second data sequence is known, the real label of the second data sequence and the predicted label of the second data sequence may be calculated by using a preset second loss function (for example, a connectionist temporal classification function), to obtain a second loss. The second loss indicates a difference between the real label of the second data sequence and the predicted label of the second data sequence. After the second loss is obtained, a parameter of the third to-be-trained model may be updated based on the second loss, and an updated third to-be-trained model may be continuously trained by using a next batch of second training data (namely, a next batch of second data sequence) (reference may be made to the foregoing process of training the third to-be-trained model by using the current batch of second training data, that is, performing step 404 and step 405 again) until a model training condition (for example, the second loss converges) is met. This is equivalent to completing fine-tuning of the first target model or fine-tuning of the second target model, which can obtain the third target model that can be used in an actual application, namely, a neural network model with a capability of obtaining a label of a data sequence.

An embodiment of this application provides a new model training architecture. The architecture includes two branches: a first to-be-trained model and a second to-be-trained model, which can implement joint pre-training of the two models. Specifically, after a first data sequence and a perturbed first data sequence are obtained, the first data sequence may be processed by using a branch in which the first to-be-trained model is located, to obtain a first feature sequence, and the perturbed first data sequence is processed by using a branch in which the second to-be-trained model is located, to obtain a second feature sequence. Then, joint training is performed on the first to-be-trained model and the second to-be-trained model based on the first feature sequence and the second feature sequence, to correspondingly obtain a first target model and a second target model. Finally, the first target model or the second target model is fine-tuned to obtain a third target model, and the third target model is used to obtain a label of a data sequence. It can be learned that in the new model training architecture, feature extraction can be performed on the perturbed first data sequence by using the first to-be-trained model, and feature extraction is performed on the original first data sequence by using the second to-be-trained model. Then, joint training is performed on the first to-be-trained model and the second to-be-trained model by using two features obtained based on the feature extraction, to complete pre-training of the two models. A final model (namely, the third target model) obtained in this pre-training manner not only can accurately obtain a label of a data sequence in a normal condition, but also cannot accurately obtain a label of a data sequence in an abnormal condition (that is, after perturbation).

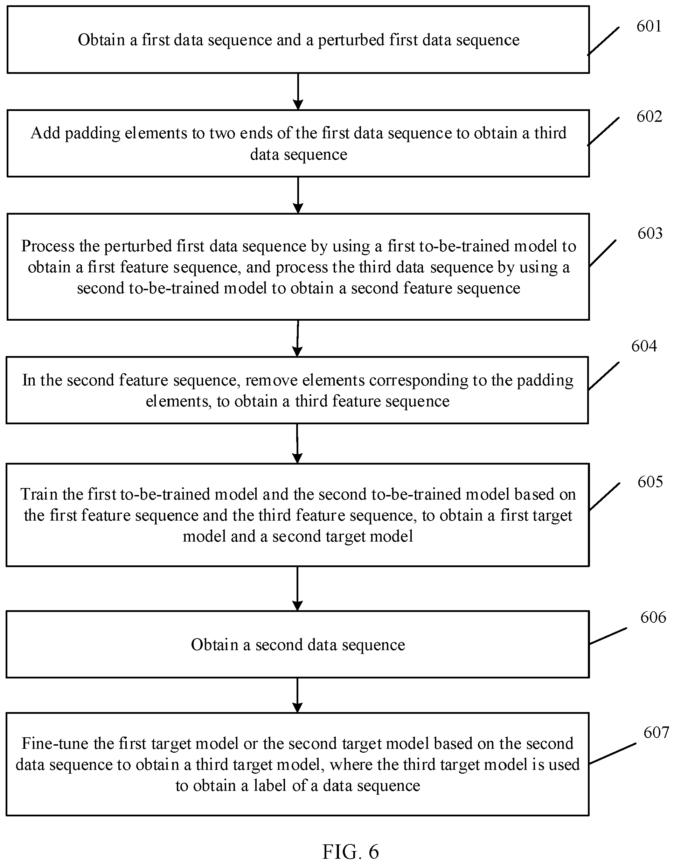

FIG. 6 is another schematic flowchart of a model training method according to an embodiment of this application. As shown in FIG. 6, the method includes the following steps.

601: Obtain a first data sequence and a perturbed first data sequence.

For descriptions of step 601, refer to a related description part of step 401 in the embodiment shown in FIG. 4. Details are not described herein again.

602: Add padding elements to two ends of the first data sequence to obtain a third data sequence.

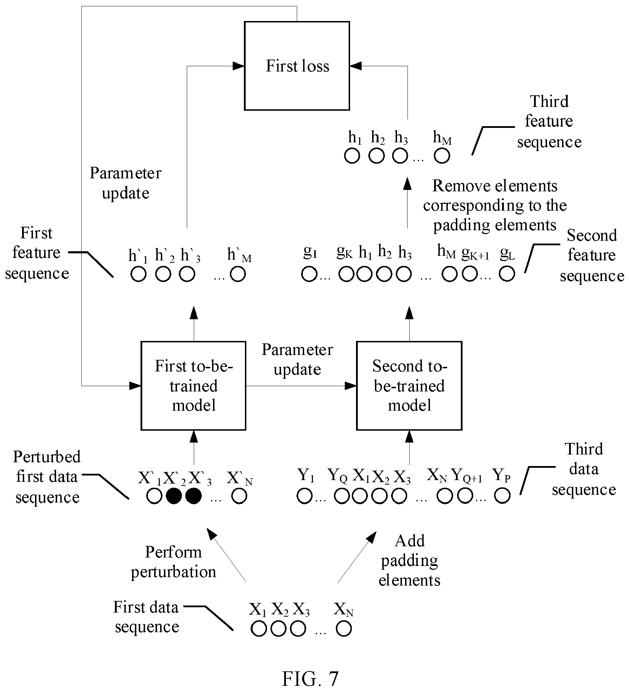

After the first data sequence and the perturbed first data sequence are obtained, the padding (padding) elements may be added to the two ends of the original first data sequence to obtain the third data sequence. It may be understood that a length of the third data sequence is greater than a length of the first data sequence. For example, as shown in FIG. 7 (FIG. 7 is another schematic diagram of a pre-training stage according to an embodiment of this application. FIG. 7 is drawn based on FIG. 5), the first data sequence is $X = \{X_1, X_2, X_3, ... , X_N\}$, the padding elements may be added to the two ends of the first data sequence $X$ to obtain the third data sequence $Y = \{Y_1,...,Y_Q, X_1,..., X_N, Y_{Q+1},..., Y_P\}$ , where $Y_j$ is a j$^{th}$ padding element, $j$ = 1, ..., $P$ , and $P \geq 2$.

603: Process the perturbed first data sequence by using a first to-be-trained model to obtain a first feature sequence, and process the third data sequence by using a second to-be-trained model to obtain a second feature sequence.

For descriptions of step 603, refer to a related description part of step 403 in the embodiment shown in FIG. 4. Details are not described herein again.

604: In the second feature sequence, remove elements corresponding to the padding elements, to obtain a third feature sequence.

After the first feature sequence and the second feature sequence are obtained, the elements that correspond to the padding elements in the third data sequence and that are in the second feature sequence may be removed, to obtain the third feature sequence. An example shown in 7 is still used. After the third data sequence Y is input to the second to-be-trained model, the third data sequence Y may be processed by using the second to-be-trained model to obtain the second feature sequence G = $\{g_1,...,g_K, h_1,...,h_M, g_{K+1},..., g_L\}$ output by the second to-be-trained model, where $g_1,...,g_L$ are elements corresponding to $Y_1,..., Y_P$ and $L \geq P$, so that the elements $g_1,...,g_L$ in the second feature sequence G can be removed to obtain the third feature sequence H=$\{h_1,...,h_M\}$.

605: Train the first to-be-trained model and the second to-be-trained model based on the first feature sequence and the third feature sequence, to obtain a first target model and a second target model.

606: Obtain a second data sequence.

607: Fine-tune the first target model or the second target model based on the second data sequence to obtain a third target model, where the third target model is used to obtain a label of a data sequence.

For descriptions of step 605 to step 607, refer to related description parts of step 403 to step 405 in the embodiment shown in FIG. 4. Details are not described herein again.

In this embodiment of this application, in a process of pre-training the first to-be-trained model and the second to-be-trained model, the padding elements may be added to the first data sequence, so that in a training process, the two models not only can use location information of elements in the sequence, but also can better learn content of the elements in the sequence, thereby improving performance of a finally obtained model.

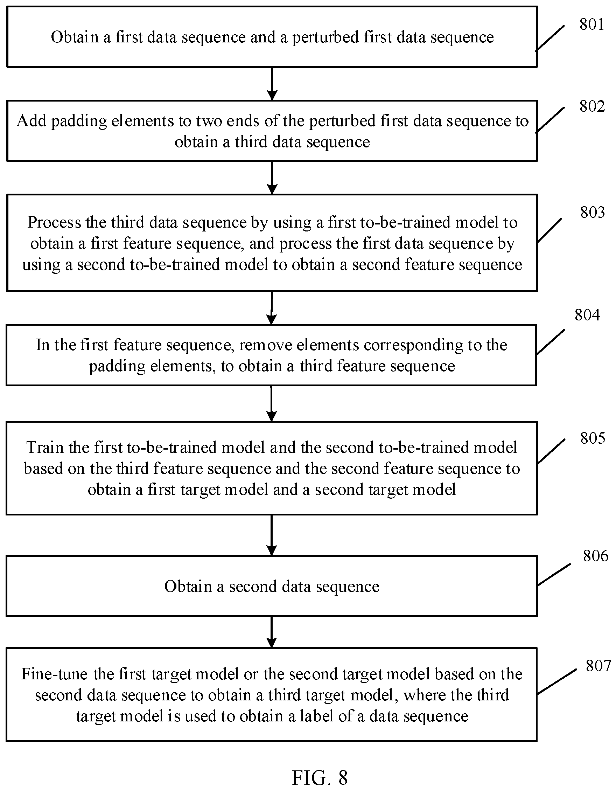

FIG. 8 is another schematic flowchart of a model training method according to an embodiment of this application. As shown in FIG. 8, the method includes the following steps.

801: Obtain a first data sequence and a perturbed first data sequence.

For descriptions of step 801, refer to a related description part of step 401 in the embodiment shown in FIG. 4. Details are not described herein again.

802: Add padding elements to two ends of the perturbed first data sequence to obtain a third data sequence.

After the first data sequence and the perturbed first data sequence are obtained, the padding elements may be added to the two ends of the perturbed first data sequence to obtain the third data sequence. It may be understood that a length of the third data sequence is greater than a length of the perturbed first data sequence.

803: Process the third data sequence by using a first to-be-trained model to obtain a first feature sequence, and process the first data sequence by using a second to-be-trained model to obtain a second feature sequence.

For descriptions of step 803, refer to a related description part of step 403 in the embodiment shown in FIG. 4. Details are not described herein again.

804: In the first feature sequence, remove elements corresponding to the padding elements, to obtain a third feature sequence.

After the first feature sequence and the second feature sequence are obtained, the elements that correspond to the padding elements in the third data sequence and that are in the first feature sequence may be removed, to obtain the third feature sequence.

805: Train the first to-be-trained model and the second to-be-trained model based on the third feature sequence and the second feature sequence to obtain a first target model and a second target model.

806: Obtain a second data sequence.

807: Fine-tune the first target model or the second target model based on the second data sequence to obtain a third target model, where the third target model is used to obtain a label of a data sequence.

For descriptions of step 805 to step 807, refer to related description parts of step 403 to step 405 in the embodiment shown in FIG. 4. Details are not described herein again.

In this embodiment of this application, in a process of pre-training the first to-be-trained model and the second to-be-trained model, the padding elements may be added to the perturbed first data sequence, so that in a training process, the two models not only can use location information of elements in the sequence, but also can better learn content of the elements in the sequence, thereby improving performance of a finally obtained model.

The foregoing is detailed descriptions of the model training method provided in the embodiments of this application. The following describes a sequence label obtaining method provided in an embodiment of this application.

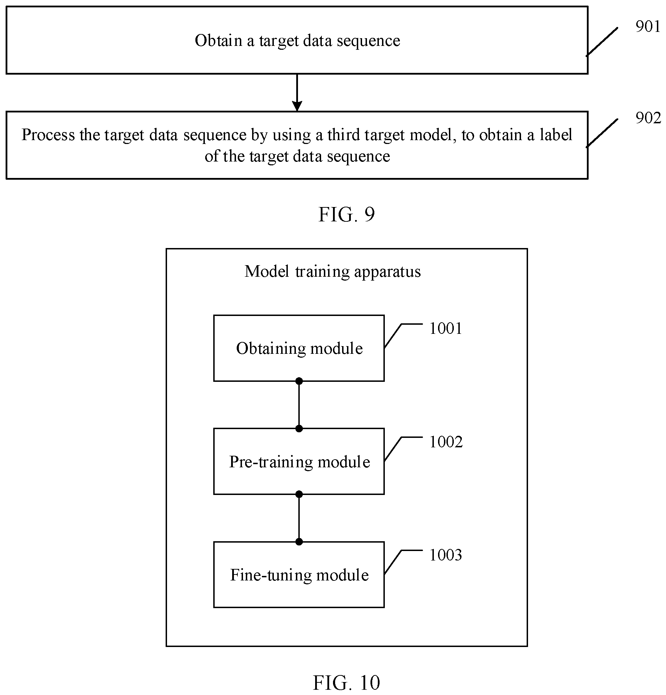

FIG. 9 is a schematic flowchart of a sequence label obtaining method according to an embodiment of this application. As shown in FIG. 9, the method includes the following steps.

901: Obtain a target data sequence.

902: Process the target data sequence by using a third target model, to obtain a label of the target data sequence.

When a user needs to obtain the label of the target data sequence, the third target model obtained in the embodiment shown in FIG. 4, the embodiment shown in FIG. 6, or the embodiment shown in FIG. 8 may be obtained, and then the target data sequence is input to the third target model, so that the target data sequence is processed by using the third target model, to obtain the label of the target data sequence for use by the user.

In this embodiment of this application, the third target model is obtained based on one of the branches of the foregoing training architecture. Therefore, the third target model can perform specific processing on the target data sequence to accurately obtain the label of the target data sequence, and has a relatively good label obtaining capability.

The foregoing is detailed descriptions of the sequence label obtaining method provided in this embodiment of this application. The following separately describes a sequence label obtaining apparatus and a model training apparatus provided in embodiments of this application. FIG. 10 is a schematic diagram of a structure of a model training apparatus according to an embodiment of this application. As shown in FIG. 10, the apparatus includes:

> an obtaining module 1001, configured to obtain a first data sequence and a perturbed first data sequence;
> a pre-training module 1002, configured to process the perturbed first data sequence by using a first to-be-trained model to obtain a first feature sequence, and process the first data sequence by using a second to-be-trained model to obtain a second feature sequence, where
> the pre-training module 1002 is further configured to train the first to-be-trained model and the second to-be-trained model based on the first feature sequence and the second feature sequence to obtain a first target model and a second target model, where the first target model is obtained by training the first to-be-trained model based on the first feature sequence and the second feature sequence, and the second target model is obtained based on a parameter in a training process of the first to-be-trained model; and
> a fine-tuning module 1003, configured to fine-tune the first target model or the second target model to obtain a third target model, where the third target model is used to obtain a label of a data sequence.

In a possible implementation, the pre-training module 1002 is configured to: obtain a first loss based on the first feature sequence and the second feature sequence, where the first loss indicates a difference between the first feature sequence and the second feature sequence; and update a parameter of the first to-be-trained model based on the first loss, and update a parameter of the second to-be-trained model based on the updated parameter of the first to-be-trained model until a model training condition is met, to obtain the first target model and the second target model.

In a possible implementation, the updated parameter of the second to-be-trained model is determined based on the updated parameter of the first to-be-trained model, the parameter of the second to-be-trained model, and a preset weight.

In a possible implementation, the fine-tuning module 1003 is configured to: obtain a second data sequence; fuse one of the first target model and the second target model with a preset model to obtain a third to-be-trained model; process the second data sequence by using the third to-be-trained model, to obtain a predicted label of the second data sequence; and train the third to-be-trained model based on a real label and the predicted label of the second data sequence, to obtain a third target model.

In a possible implementation, the obtaining module 1001 is further configured to add padding elements to two ends of the first data sequence or two ends of the perturbed first data sequence.

In a possible implementation, the perturbation includes at least one of adding noise, adding reverberation, and adding a mask in a time-frequency domain.

In a possible implementation, the first data sequence and the second data sequence are speech sequences, and that the third target model is used to obtain a label of a data sequence is specifically that the third target model is used to obtain a recognition result of the speech sequence; or the first data sequence and the second data sequence are text sequences, and that the third target model is used to obtain a label of a data sequence is specifically that the third target model is used to obtain a recognition result of the text sequence; or the first data sequence and the second data sequence are image sequences, and that the third target model is used to obtain a label of a data sequence is specifically that the third target model is used to obtain a classification result of the image sequence.

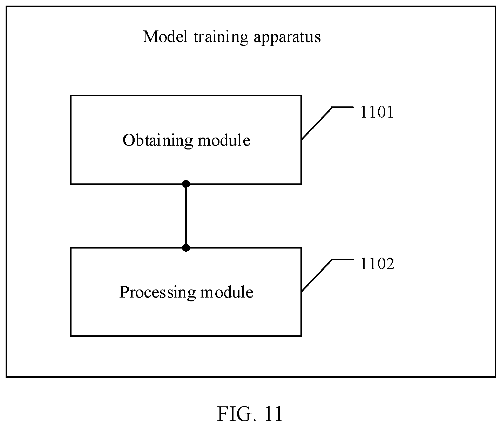

FIG. 11 is a schematic diagram of a structure of a sequence label obtaining apparatus according to an embodiment of this application. As shown in FIG. 11, the apparatus includes:

an obtaining module 1101, configured to obtain a target data sequence; and
a processing module 1102, configured to process the target data sequence by using a third target model, to obtain a label of the target data sequence, where the third target model is obtained through training according to the model training method in the embodiment shown in FIG. 4.

It should be noted that, content such as information exchange between the modules/units of the foregoing apparatus and the execution processes is based on the same idea as the method embodiments of this application, and brings the same technical effects as the method embodiments of this application. For specific content, refer to the foregoing descriptions in the method embodiments in the embodiments of this application. Details are not described herein again.

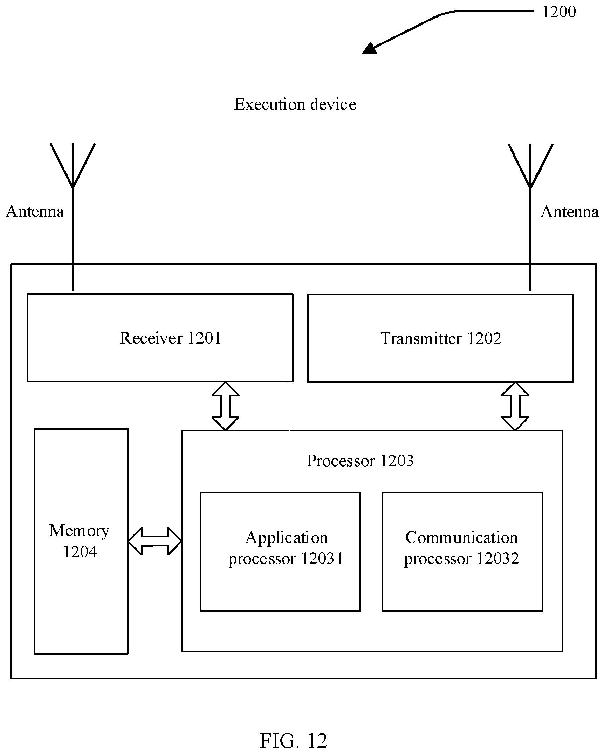

An embodiment of this application further relates to an execution device. FIG. 12 is a schematic diagram of a structure of an execution device according to an embodiment of this application. As shown in FIG. 12, an execution device 1200 may be specifically a mobile phone, a tablet, a notebook computer, an intelligent wearable device, a server, or the like. This is not limited herein. The sequence label obtaining apparatus described in the embodiment corresponding to FIG. 12 may be deployed on the execution device 1200, to implement a sequence label obtaining function in the embodiment corresponding to FIG. 9. Specifically, the execution device 1200 includes a receiver 1201, a transmitter 1202, a processor 1203, and a memory 1204 (there may be one or more processors 1203 in the execution device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide instructions and data to the processor 1203. A part of the memory 1204 may further include a non-volatile random access memory (non-volatile random access memory, NVRAM). The memory 1204 stores a processor and operation instructions, an executable module or a data structure, or a subset thereof, or an extended set thereof. The operation instructions may include various operation instructions used to implement various operations.

The processor 1203 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the embodiments of this application may be applied to the processor 1203, or may be implemented by using the processor 1203. The processor 1203 may be an integrated circuit chip and has a signal processing capability. In an implementation process, steps in the foregoing methods may be implemented by using a hardware integrated logical circuit in the processor 1203, or by using instructions in a form of software. The processor 1203 may be a general-purpose processor, a digital signal processor (digital signal processing, DSP), a microprocessor, or a microcontroller. The processor 1203 may further include an application-specific integrated circuit (application specific integrated circuit, ASIC), a field-programmable gate array (field-programmable gate array, FPGA) or another programmable logic device, a discrete gate, or a transistor logic device, or a discrete hardware component. The processor 1203 may implement or perform the method, the steps, and the logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1204, and the processor 1203 reads information in the memory 1204 and completes the steps in the foregoing methods in combination with hardware of the processor 1203.

The receiver 1201 may be configured to receive input digit or character information, and generate signal input related to related setting and function control of the execution device. The transmitter 1202 may be configured to output digital or character information through a first interface. The transmitter 1202 may be further configured to send instructions to a disk group through the first interface, to modify data in the disk group. The transmitter 1202 may further include a display device such as a display screen.

In this embodiment of this application, in one case, the processor 1203 is configured to obtain a label of a target data sequence by using the third target model in the embodiment corresponding to FIG. 9.

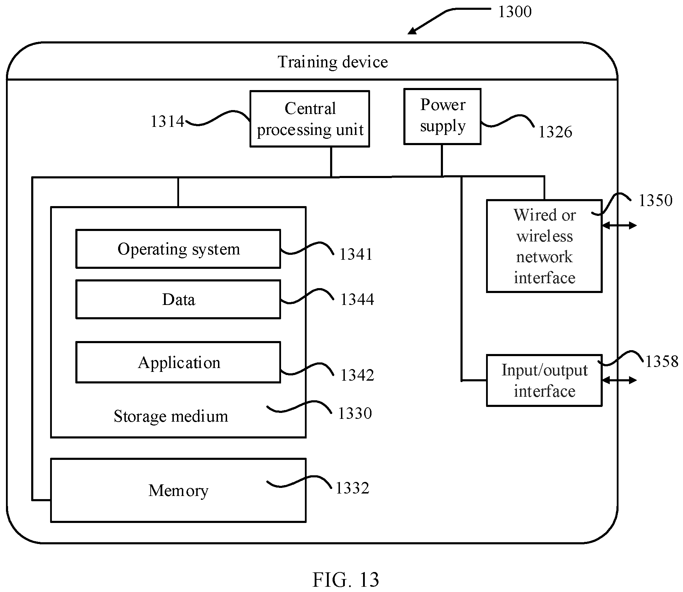

An embodiment of this application further relates to a training device. FIG. 13 is a schematic diagram of a structure of a training device according to an embodiment of this application. As shown in FIG. 13, a training device 1300 is implemented by one or more servers, and the training device 1300 may vary greatly based on different configuration or performance. The training device 1300 may include one or more central processing units (central processing units, CPU) 1314 (for example, one or more processors), a memory 1332, and one or more storage media 1330 (for example, one or more mass storage devices) that store an application 1342 or data 1344. The memory 1332 and the storage medium 1330 may be transient storage or persistent storage. The program stored in the storage medium 1330 may include one or more modules (not shown in the figure), and each module may include a series of instruction operations for the training device. Further, the central processing unit 1314 may be configured to communicate with the storage medium 1330, and execute a series of instruction operations in the storage medium 1330 on the training device 1300.

The training device 1300 may further include one or more power supplies 1326, one or more wired or wireless network interfaces 1350, and one or more input/output interfaces 1358, or one or more operating systems 1341, for example, Windows Server™, Mac OS XTM, UnixTM, LinuxTM, and FreeBSDTM.

Specifically, the training device may perform the model training method in the embodiment corresponding to FIG. 4, FIG. 6, or FIG. 8.

An embodiment of this application further relates to a computer storage medium. The computer-readable storage medium stores a program used to perform signal processing. When the computer storage medium runs on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or a terminal device in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the embodiments, or a chip in the training device performs the data processing method described in the embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

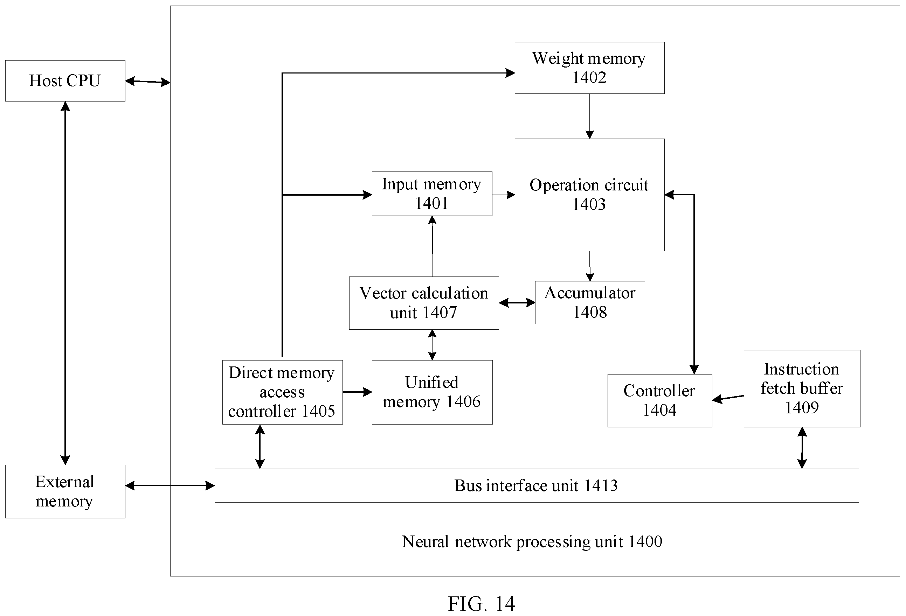

Specifically, refer to FIG. 14. FIG. 14 is a schematic diagram of a structure of a chip according to an embodiment of this application. The chip may be represented by a neural network processing unit NPU 1400, and the NPU 1400 is mounted on a host CPU (Host CPU) as a coprocessor. The host CPU allocates a task. A core part of the NPU is an operation circuit 1403, and the operation circuit 1403 is controlled by a controller 1404 to extract matrix data from the memory and perform a multiplication operation.

In some implementations, the operation circuit 1403 includes a plurality of processing engines (Process Engine, PE) inside. In some implementations, the operation circuit 1403 is a two-dimensional systolic array. The operation circuit 1403 may alternatively be a one-dimensional systolic array or another electronic circuit capable of performing mathematical operations such as multiplication and addition. In some implementations, the operation circuit 1403 is a general-purpose matrix processor.

For example, it is assumed that there is an input matrix A, a weight matrix B, and an output matrix C. The operation circuit fetches, from a weight memory 1402, data corresponding to the matrix B, and caches the data on each PE in the operation circuit. The operation circuit fetches data of the matrix A from an input memory 1401, to perform a matrix operation with the matrix B, and stores an obtained partial result or an obtained final result of the matrix in an accumulator (accumulator) 1408.

A unified memory 1406 is configured to store input data and output data. Weight data is directly transferred to the weight memory 1402 by using a direct memory access controller (Direct Memory Access Controller, DMAC) 1405 DMAC. The input data is also transferred to the unified memory 1406 by using the DMAC.

ABIU is a bus interface unit, namely, a bus interface unit 1413, and is configured to perform interaction between an AXI bus, and the DMAC and an instruction fetch buffer (Instruction Fetch Buffer, IFB) 1409.

A bus interface unit 1413 (Bus Interface Unit, BIU for short) is used by the instruction fetch buffer 1409 to obtain instructions from an external memory, and is further used by the direct memory access controller 1405 to obtain original data of the input matrix A or the weight matrix B from an external memory.

The DMAC is mainly configured to transfer input data in an external memory DDR to the unified memory 1406, transfer the weight data to the weight memory 1402, or transfer the input data to the input memory 1401.

A vector calculation unit 1407 includes a plurality of operation processing units, and performs further processing such as vector multiplication, vector addition, an exponent operation, a logarithm operation, or value comparison on an output of the operation circuit 1403 when required. This is mainly used for network calculations of a non-convolutional/full-connection layer in a neural network, for example, batch normalization (batch normalization), pixel-level summation, and upsampling on a predicted label plane.

In some implementations, the vector calculation unit 1407 can store a processed output vector in the unified memory 1406. For example, the vector calculation unit 1407 may apply a linear function or a nonlinear function to an output of the operation circuit 1403, for example, perform a linear interpolation on a predicted label plane extracted by a convolutional layer, for another example, apply a vector of an accumulated value to generate an activation value. In some implementations, the vector calculation unit 1407 generates a normalized value, a pixel-level summation value, or both a normalized value and a pixel-level summation value. In some implementations, the processed output vector can be used as an activation input to the operation circuit 1403, for example, the processed output vector can be used at a subsequent layer of the neural network.

The instruction fetch buffer (instruction fetch buffer) 1409 connected to the controller 1404 is configured to store instructions used by the controller 1404.

The unified memory 1406, the input memory 1401, the weight memory 1402, and the instruction fetch buffer 1409 are all on-chip memories. The external memory is private for a hardware architecture of the NPU.

The processor mentioned above may be a general-purpose central processing unit, a microprocessor, an ASIC, or one or more integrated circuits for controlling the foregoing program execution.

In addition, it should be noted that the apparatus embodiments described above are merely an example. The units described as separate parts may or may not be physically separate, and parts displayed as units may or may not be physical units, may be located in one location, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A model training method, wherein the method comprises:

   obtaining a first data sequence and a perturbed first data sequence;
   processing the perturbed first data sequence by using a first to-be-trained model to obtain a first feature sequence, and processing the first data sequence by using a second to-be-trained model to obtain a second feature sequence;
   training the first to-be-trained model and the second to-be-trained model based on the first feature sequence and the second feature sequence to obtain a first target model and a second target model, wherein the first target model is obtained by training the first to-be-trained model based on the first feature sequence and the second feature sequence, and the second target model is obtained based on a parameter in a training process of the first to-be-trained model; and
   fine-tuning the first target model or the second target model to obtain a third target model, wherein the third target model is used to obtain a label of a data sequence.

2. The method according to claim 1, wherein the training the first to-be-trained model and the second to-be-trained model based on the first feature sequence and the second feature sequence to obtain a first target model and a second target model comprises:

   obtaining a first loss based on the first feature sequence and the second feature sequence, wherein the first loss indicates a difference between the first feature sequence and the second feature sequence; and
   updating a parameter of the first to-be-trained model based on the first loss, and updating a parameter of the second to-be-trained model based on the updated parameter of the first to-be-trained model until a model training condition is met, to obtain the first target model and the second target model.

3. The method according to claim 2, wherein the updated parameter of the second to-be-trained model is determined based on the updated parameter of the first to-be-trained model, the parameter of the second to-be-trained model, and a preset weight.

4. The method according to any one of claims 1 to 3, wherein the fine-tuning the first target model or the second target model to obtain a third target model comprises:

   obtaining a second data sequence;
   fusing one of the first target model and the second target model with a preset model to obtain a third to-be-trained model;
   processing the second data sequence by using the third to-be-trained model, to obtain a predicted label of the second data sequence; and
   training the third to-be-trained model based on a real label and the predicted label of the second data sequence, to obtain the third target model.

5. The method according to any one of claims 1 to 4, wherein before the processing the first data sequence by using a first to-be-trained model to obtain a first feature sequence, and processing the perturbed first data sequence by using a second to-be-trained model to obtain a second feature sequence, the method further comprises:
   adding padding elements to two ends of the first data sequence or two ends of the perturbed first data sequence.

6. The method according to any one of claims 1 to 5, wherein the perturbation comprises at least one of adding noise, adding reverberation, and adding a mask in a time-frequency domain.

7. The method according to claim 4, wherein the first data sequence and the second data sequence are speech sequences, and that the third target model is used to obtain a label of a data sequence is specifically that the third target model is used to obtain a recognition result of the speech sequence; or

   the first data sequence and the second data sequence are text sequences, and that the third target model is used to obtain a label of a data sequence is specifically that the third target model is used to obtain a recognition result of the text sequence; or
   the first data sequence and the second data sequence are image sequences, and that the third target model is used to obtain a label of a data sequence is specifically that the third target model is used to obtain a classification result of the image sequence.

8. A sequence label obtaining method, wherein the method comprises:

obtaining a target data sequence; and
processing the target data sequence by using a third target model, to obtain a label of the target data sequence, wherein the third target model is obtained through training by using the model training method according to any one of claims 1 to 7.

9. A model training apparatus, wherein the apparatus comprises:

an obtaining module, configured to obtain a first data sequence and a perturbed first data sequence;
a pre-training module, configured to process the perturbed first data sequence by using a first to-be-trained model to obtain a first feature sequence, and process the first data sequence by using a second to-be-trained model to obtain a second feature sequence, wherein
the pre-training module is further configured to train the first to-be-trained model and the second to-be-trained model based on the first feature sequence and the second feature sequence to obtain a first target model and a second target model, the first target model is obtained by training the first to-be-trained model based on the first feature sequence and the second feature sequence, and the second target model is obtained based on a parameter in a training process of the first to-be-trained model; and
a fine-tuning module, configured to fine-tune the first target model or the second target model to obtain a third target model, wherein the third target model is used to obtain a label of a data sequence.

10. The apparatus according to claim 9, wherein the pre-training module is configured to:

obtain a first loss based on the first feature sequence and the second feature sequence, wherein the first loss indicates a difference between the first feature sequence and the second feature sequence; and
update a parameter of the first to-be-trained model based on the first loss, and update a parameter of the second to-be-trained model based on the updated parameter of the first to-be-trained model until a model training condition is met, to obtain the first target model and the second target model.

11. The apparatus according to claim 10, wherein the updated parameter of the second to-be-trained model is determined based on the updated parameter of the first to-be-trained model, the parameter of the second to-be-trained model, and a preset weight.

12. The apparatus according to any one of claims 9 to 11, wherein the fine-tuning module is configured to:

obtain a second data sequence;
fuse one of the first target model and the second target model with a preset model to obtain a third to-be-trained model;
process the second data sequence by using the third to-be-trained model, to obtain a predicted label of the second data sequence; and
train the third to-be-trained model based on a real label and the predicted label of the second data sequence, to obtain the third target model.

13. The apparatus according to any one of claims 9 to 12, wherein the obtaining module is further configured to add padding elements to two ends of the first data sequence or two ends of the perturbed first data sequence.

14. The apparatus according to any one of claims 9 to 13, wherein the perturbation comprises at least one of adding noise, adding reverberation, and adding a mask in a time-frequency domain.

15. The apparatus according to claim 12, wherein the first data sequence and the second data sequence are speech sequences, and that the third target model is used to obtain a label of a data sequence is specifically that the third target model is used to obtain a recognition result of the speech sequence; or

the first data sequence and the second data sequence are text sequences, and that the third target model is used to obtain a label of a data sequence is specifically that the third target model is used to obtain a recognition result of the text sequence; or

the first data sequence and the second data sequence are image sequences, and that the third target model is used to obtain a label of a data sequence is specifically that the third target model is used to obtain a classification result of the image sequence.

16. A sequence label obtaining apparatus, wherein the apparatus comprises:

an obtaining module, configured to obtain a target data sequence; and
a processing module, configured to process the target data sequence by using a third target model, to obtain a label of the target data sequence, wherein the third target model is obtained through training by using the model training method according to any one of claims 1 to 7.

17. A model training apparatus, wherein the apparatus comprises a memory and a processor, the memory stores code, the processor is configured to execute the code, and when the code is executed, the model training apparatus performs the method according to any one of claims 1 to 7.

18. A sequence label obtaining apparatus, wherein the apparatus comprises a memory and a processor, the memory stores code, the processor is configured to execute the code, and when the code is executed, the sequence label obtaining apparatus performs the method according to claim 8.

19. A computer storage medium, wherein the computer storage medium stores one or more instructions, and when the one or more instructions is/are executed by one or more computers, the one or more computers is/are enabled to implement the method according to any one of claims 1 to 8.

20. A computer program product, wherein the computer program product stores instructions, and when the instructions are executed by a computer, the computer is enabled to implement the method according to any one of claims 1 to 8.

FIG. 1

FIG. 2a

Interaction interface

To-be-enhanced image     Enhanced image

Memory    Processor    Data training/Machine learning/Deep learning    Searching/ Inference/ Decision-making

Data processing device (server)

13:21

EP 4 401 000 A1

| User | Intelligent terminal |
|------|---------------------|

13:21

Interaction interface

To-be-enhanced image | Enhanced image

Memory | Processor: | Data training/Machine learning/Deep learning | Searching/ Inference/ Decision-making | ...

Intelligent terminal

FIG. 2b

300

Execution device 210

Data storage system 250

Communication network

Local device 301

Local device 302

For example

FIG. 2c

FIG. 3

Obtain a first data sequence and a perturbed first data sequence ⟋ 401

Process the perturbed first data sequence by using a first to-be-trained model to obtain a first feature sequence, and process the first data sequence by using a second to-be-trained model to obtain a second feature sequence ⟋ 402

Train the first to-be-trained model and the second to-be-trained model based on the first feature sequence and the second feature sequence to obtain a first target model and a second target model ⟋ 403

Obtain a second data sequence ⟋ 404

Fine-tune the first target model or the second target model based on the second data sequence to obtain a third target model, where the third target model is used to obtain a label of a data sequence ⟋ 405

FIG. 4

Parameter
update

First loss

First
feature
sequence

$h`_1$  $h`_2$  $h`_3$  $h`_M$     $h_1$  $h_2$  $h_3$  $h_M$

Second
feature
sequence

○    ○    ○ ... ○     ○    ○    ○ ... ○

Parameter
update

First to-be-
trained model

Second to-be-
trained model

Perturbed
first data
sequence

$X`_1$  $X`_2$  $X`_3$  $X`_N$

○    ●    ● ... ○

Perform
perturbation

First data
sequence

$X_1$  $X_2$  $X_3$  $X_N$

○    ○    ○ ... ○

FIG. 5

Obtain a first data sequence and a perturbed first data sequence 601

Add padding elements to two ends of the first data sequence to obtain a third data sequence 602

Process the perturbed first data sequence by using a first to-be-trained model to obtain a first feature sequence, and process the third data sequence by using a second to-be-trained model to obtain a second feature sequence 603

In the second feature sequence, remove elements corresponding to the padding elements, to obtain a third feature sequence 604

Train the first to-be-trained model and the second to-be-trained model based on the first feature sequence and the third feature sequence, to obtain a first target model and a second target model 605

Obtain a second data sequence 606

Fine-tune the first target model or the second target model based on the second data sequence to obtain a third target model, where the third target model is used to obtain a label of a data sequence 607

FIG. 6

First loss

Third
feature
sequence

$h_1$ $h_2$ $h_3$    $h_M$
◯ ◯ ◯ ... ◯

Parameter
update

Remove elements
corresponding to the
padding elements

Second
feature
sequence

First
feature
sequence

$h`_1$ $h`_2$ $h`_3$    $h`_M$
◯ ◯ ◯ ... ◯

$g_1$    $g_K$ $h_1$ $h_2$ $h_3$    $h_M$ $g_{K+1}$ $g_L$
◯... ◯◯◯◯ ... ◯◯... ◯

First to-be-
trained
model

Parameter
update

Second to-
be-trained
model

Perturbed
first data
sequence

$X`_1$$X`_2$$X`_3$    $X`_N$
◯●● ... ◯

$Y_1$  $Y_Q$ $X_1$$X_2$ $X_3$    $X_N$ $Y_{Q+1}$  $Y_P$
◯... ◯◯◯◯ ... ◯◯... ◯

Third
data
sequence

Perform
perturbation

Add
padding
elements

First data
sequence

$X_1$ $X_2$ $X_3$    $X_N$
◯◯◯ ... ◯

FIG. 7

| Obtain a first data sequence and a perturbed first data sequence | 801 |

| Add padding elements to two ends of the perturbed first data sequence to obtain a third data sequence | 802 |

| Process the third data sequence by using a first to-be-trained model to obtain a first feature sequence, and process the first data sequence by using a second to-be-trained model to obtain a second feature sequence | 803 |

| In the first feature sequence, remove elements corresponding to the padding elements, to obtain a third feature sequence | 804 |

| Train the first to-be-trained model and the second to-be-trained model based on the third feature sequence and the second feature sequence to obtain a first target model and a second target model | 805 |

| Obtain a second data sequence | 806 |

| Fine-tune the first target model or the second target model based on the second data sequence to obtain a third target model, where the third target model is used to obtain a label of a data sequence | 807 |

FIG. 8

| | |
|---|---|
| Obtain a target data sequence | 901 |

| | |
|---|---|
| Process the target data sequence by using a third target model, to obtain a label of the target data sequence | 902 |

FIG. 9

Model training apparatus

| | |
|---|---|
| Obtaining module | 1001 |

| | |
|---|---|
| Pre-training module | 1002 |

| | |
|---|---|
| Fine-tuning module | 1003 |

FIG. 10

Model training apparatus

Obtaining module — 1101

Processing module — 1102

FIG. 11

1200

Execution device

| Antenna | | Antenna |
| --- | --- | --- |

| Receiver 1201 | Transmitter 1202 |
| --- | --- |

Processor 1203

| Memory 1204 | Application processor 12031 | Communication processor 12032 |
| --- | --- | --- |

FIG. 12

FIG. 13

Instruction
fetch buffer
1409

Controller
1404

Weight memory
1402

Operation circuit
1403

Accumulator
1408

Input memory
1401

Vector calculation
unit 1407

Unified
memory 1406

Direct memory
access
controller 1405

Bus interface unit 1413

Neural network processing unit 1400

Host CPU

External
memory

FIG. 14

## INTERNATIONAL SEARCH REPORT

| International application No. |
|---|
| **PCT/CN2022/120108** |

**A.  CLASSIFICATION OF SUBJECT MATTER**

G06F 40/117(2020.01)i;  G06N 3/04(2006.01)i

According to International Patent Classification (IPC) or to both national classification and IPC

**B.  FIELDS SEARCHED**

Minimum documentation searched (classification system followed by classification symbols)

G06F;  G06N

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 模型, 训练, 序列, 标注, 标签, 调整, 微调, 扰动, 噪声, model, training, sequence, labeling, adjusting, tuning, perturbing, noise

**C.  DOCUMENTS CONSIDERED TO BE RELEVANT**

| Category* | Citation of document, with indication, where appropriate, of the relevant passages | Relevant to claim No. |
|---|---|---|
| Y | CN 111737952 A (SHENZHEN QIANHAI WEBANK CO., LTD.) 02 October 2020 (2020-10-02) <br> description, paragraphs [0086]-[0168] and [0240]-[0243], and figure 1 | 1-20 |
| Y | CN 110210035 A (SOOCHOW UNIVERSITY) 06 September 2019 (2019-09-06) <br> description, paragraphs [0052]-[0133], and figures 1-4 | 1-20 |
| A | CN 112215298 A (PING AN INTERNATIONAL SMART CITY TECHNOLOGY CO., LTD.) 12 January 2021 (2021-01-12) <br> entire document | 1-20 |
| A | WO 2021164317 A1 (TENCENT TECHNOLOGY SHENZHEN CO., LTD.) 26 August 2021 (2021-08-26) <br> entire document | 1-20 |
| A | US 2021201147 A1 (TENCENT TECHNOLOGY SHENZHEN CO., LTD.) 01 July 2021 (2021-07-01) <br> entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2022** | **25 November 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/120108**

| Patent document cited in search report | | | Publication date (day/month/year) | Patent family member(s) | | | Publication date (day/month/year) |
|---|---|---|---|---|---|---|---|
| CN | 111737952 | A | 02 October 2020 | WO | 2021258914 | A1 | 30 December 2021 |
| CN | 110210035 | A | 06 September 2019 | | None | | |
| CN | 112215298 | A | 12 January 2021 | | None | | |
| WO | 2021164317 | A1 | 26 August 2021 | CN | 111352965 | A | 30 June 2020 |
| | | | | US | 2022215298 | A1 | 07 July 2022 |
| US | 2021201147 | A1 | 01 July 2021 | JP | 2021533466 | A | 02 December 2021 |
| | | | | CN | 110162799 | A | 23 August 2019 |
| | | | | WO | 2020108483 | A1 | 04 June 2020 |

Form PCT/ISA/210 (patent family annex) (January 2015)

**REFERENCES CITED IN THE DESCRIPTION**

**Patent documents cited in the description**

- CN 202111138624